Europäisches Patentamt

European Patent Office

Office européen des brevets

(11) Veröffentlichungsnummer: **0 250 841 B1**

# EUROPÄISCHE PATENTSCHRIFT

(45) Veröffentlichungstag der Patentschrift: **27.07.94**

(21) Anmeldenummer: **87107439.9**

(22) Anmeldetag: **22.05.87**

(51) Int. Cl.⁵: **G01J  5/62**

(54) **Verfahren zum berührungslosen Messen einer Temperatur von einem Körper sowie Anordnung hierfür.**

(30) Priorität: **20.06.86 CH 2503/86**

(43) Veröffentlichungstag der Anmeldung:
**07.01.88 Patentblatt  88/01**

(45) Bekanntmachung des Hinweises auf die
Patenterteilung:
**27.07.94 Patentblatt  94/30**

(84) Benannte Vertragsstaaten:
**AT BE CH DE ES FR GB GR IT LI LU NL SE**

(56) Entgegenhaltungen:
**EP-A- 0 098 402**
**FR-A- 1 234 318**
**FR-A- 2 306 438**
**US-A- 3 794 838**

(73) Patentinhaber: **Lehmann, Martin**
**Obere Farnbühlstrasse 1**
**5610 Wohlen 1(CH)**

(72) Erfinder: **Weiss, Hardy P., Dr.**
**Im Seeblick**
**CH-8821 Hütten(CH)**

(74) Vertreter: **Troesch, Jacques J., Dr. sc. nat. et al**
**Troesch Scheidegger Werner AG**
**Siewerdtstrasse 95**
**CH-8050 Zürich (CH)**

# Beschreibung

Die vorliegende Erfindung betrifft ein Verfahren bzw. eine Anordnung zum berührungslosen Messen einer Temperatur von einem Körper nach dem Oberbegriff von Anspruch 1 bzw. Anspruch 13.

Beim berührungslosen Messen einer von der Wärmestrahlung eines Körpers herrührenden Temperatur - es wird nicht von der Körpertemperatur gesprochen, da der Körper hierbei thermisch nicht ausgeglichen zu sein braucht - entsteht das Problem, dass die Umgebungsstrahlung das Messresultat drastisch verfälschen kann. Dieses Problem, eigentlich ein Problem des Verhältnisses zwischen Signal und Rauschen, wird dann immer kritischer, wenn Temperaturen gemessen werden sollen, die nur wenig über oder unter der Umgebungstemperatur liegen, wobei unter wenig doch einige $100°$ verstanden sei.

Aus der US-A-3 794 838 ist es bekannt, einen Wärmesensor in einen Körper mit grosser, thermisch träger Masse vorzusehen.

Die Temperatur des Körpers wird elektrisch gestellt, derart, dass innerhalb eines zwischen einem Zerhacker und dem Sensor verlaufenden Fensters im Körper eine vorgegebene Temperatur gehalten wird. Es wird die von auszumessenden Körpern mittels des Zerhackers zerhackte und über eine Linse dem Sensor zugeführte Wärmestrahlung gemessen.

Aus der FR-A-2 306 438 ist es bekannt, die Temperatur der Umgebung einer Thermofühlerplatte auf die Temperatur dieser Thermofühlerplatte zu regeln, um, bei der Temperaturmessung eines Körpers mit der Fühlerplatte, Wärmeverluste von letzterer in die Umgebung zu minimalisieren.

Aus der EP-A-0 098 402 ist schliesslich ein Verfahren bzw. eine Anordnung eingangs genannter Art bekannt. Es wird eine Temperatur in der Umgebung des zur Primärerfassung einer Körpertemperatur vorgesehenen Sensors erfasst, und zwar auf der dem genannten Primärsensor zugewandten Seite eines Zerhackers. Die mit dem hierzu zusätzlich vorgesehenen Sensor gemessene Temperatur wird zu Korrekturzwecken mit der durch den genannten Primärsensor erfassten Temperatur verrechnet.

Es ist Aufgabe der vorliegenden Erfindung, die Temperatur eines Körpers entsprechend seiner thermischen Strahlung genan und einfach zu messen.

Dies wird bei einem Verfahren eingangs genannter Art bei dessen Durchführung nach dem kennzeichnenden Teil von Anspruch 1 erreicht.

Weil die Wärmestrahlung zwischen dem Körper und dem vorgesehenen Temperatursensor zerhackt wird, entstehen vom Sensor detektierte Wärmestrahlungsimpulse, deren Amplitude gegeben ist durch zwei Wärmestrahlungsanteile, nämlich erstens durch die Umgebungsstrahlung sensorseitig des Zerhackers und zweitens die Wärmestrahlung auf der dem Sensor abgekehrten Seite des Zerhackers, welch letztere sich zusammensetzt aus der dortigen Umgebungseinstrahlung und der zu erfassenden Körperstrahlung.

Während die Umgebungsstrahlung auf der dem Sensor abgekehrten Seite des Zerhackers nicht von der Körperstrahlung zu trennen ist, anderseits aber z.B. durch einen möglichst gering gewählten Abstand zwischen Zerhacker und Körper auf ein unsignifikantes Mass reduziert werden kann, im weiteren praktisch zeitinvariant ist, bildet die Umgebungsstrahlung sensorseitig des Zerhackers ein akuteres Problem, insbesondere wenn man ihre zeitliche Aenderung betrachtet, wie sie nach Ingangsetzen von Sensor und Zerhacker eintritt, bedingt durch elektrische Speisungen sowie generell die Zerhackerarbeit und die Tatsache, dass Montageorgane für Sensor und Zerhacker relativ kleinvolumige Räume festlegen, worin Temperaturänderungen trotz stabiler grossräumiger Temperatur sich ergeben.

Dadurch, dass nun eine Umgebungstemperatur des Sensors auf der dem Sensor zugewandten Seite des Zerhackers im Bereiche des Zerhackers, mittels eines Temperaturregelkreises mit einem Temperaturstellglied, das auf den Sensor wirkt, auf einen vorgegebenen Wert geregelt wird, gelingt es, eine allein für die Körperstrahlung repräsentative Temperaturmessung vorzunehmen, schon bevor das Teilsystem sensorseitig des Zerhackers sich thermisch stabilisiert hat, was, je nach Aufbau, relativ lange Zeiten beanspruchen kann.

Bekanntlich sind handelsübliche Temperatursensoren für die berührungslose Messung einer Wärmestrahlung in einem Gehäuse als fertige Bauteile, üblicherweise mit integriertem Verstärker ausgebildet, womit im weiteren vorgeschlagen wird, nach Anspruch 2 vorzugehen.

Die Wärmestrahlung des Sensorgehäuses wirkt sich unmittelbar auf den eigentlichen Sensor, üblicherweise ein Halbleiterplättchen im Gehäuse integriert, aus.

Eine weitere, vorzugsweise nicht zu vernachlässigende Strahlungsquelle ist der Zerhacker. Wegen der durch ihn verrichteten Arbeit, insbesondere, wenn es sich dabei um einen mechanisch bewegten Zerhacker handelt, wirkt er in der Umgebungsluft wie eine Joule'sche Bremse, womit weiter vorgeschlagen wird, nach dem Wortlaut von Anspruch 3 vorzugehen.

Es wird im weiteren vorgeschlagen, gemäss den Ansprüchen 4 bzw. 5, dass man die Temperatur des Sensorgehäuses auf einen vorgegebenen Wert regelt, allenfalls auch die durch Arbeit des Zerhackers bewirkte Temperatur.

Obwohl auch eine Regelung gemäss Anspruch 5 möglich ist, ist doch zu berücksichtigen, dass wegen der Ausgedehntheit eines mechanischen Zerhackers eine solche Regelung zum Erhalt von Temperaturausgeglichenheit am ganzen Zerhacker relativ träge wird.

Deshalb wird weiter vorgeschlagen, dass man die mittels des Sensors gemessene Temperatur in Funktion der durch den Zerhacker bewirkten und gemessenen Temperatur korrigiert, gemäss Wortlaut von Anspruch 6.

Dabei wird bevorzugterweise nach dem Wortlaut von Anspruch 7 vorgegangen.

Bevorzugterweise wird, um zufällige Schwankungen des Sensorausgangssignals zu eliminieren, nach dem Wortlaut von Anspruch 8 vorgegangen.

Die Koeffizienten für die Korrektur des Sensorausgangssignals aufgrund der durch Zerhackerarbeit bewirkten Temperatur werden vorzugsweise gemäss Wortlaut von Anspruch 9 bestimmt und abgespeichert.

Wie erwähnt, kann nur dann von einer Körpertemperatur gesprochen werden, wenn der Körper thermisch ausgeglichen ist.

Anderseits ist eine Temperaturmessung an einem thermisch nicht ausgeglichenen Körper für den thermischen Energieinhalt eines unmittelbar im Bereich der Messung liegenden Körpervolumenelementes repräsentativ.

Um nun bei grösseren Körpern mit einer erfindungsgemässen Temperaturmessung eine Aussage über den thermischen Energieinhalt eines möglichst grossen Volumenelementes des Körpers zu erhalten, wird nun weiter vorgeschlagen, nach dem Wortlaut von Anspruch 10 vorzugehen.

Die genannte Einbuchtung kann beispielsweise die Oeffnung einer, als Körper, auszumessenden Dose sein, oder es wird bei Körpern, die an sich noch keine derartige Einbuchtung aufweisen, wie Metallbarren, eine Einbuchtung, wie in Form einer Bohrung vorgesehen, womit die erwähnte Temperaturmessung für den thermischen Energieinhalt eines wesentlich grösseren Körpervolumenelementes repräsentativ wird, wirkt doch die vorgesehene Einbuchtung als ähnlich einem schwarzen Körper strahlendes Gebilde und gibt eine Wärmestrahlung, die dem über ein relativ grosses angrenzendes Volumen gemittelten Wärmeinhalt entspricht, ab.

Wird der Körper relativ zum Sensor bewegt, wie beispielsweise auf einer Produktionsstrasse, so wird weiter vorgeschlagen, nach dem Wortlaut von Anspruch 11 vorzugehen.

Die erfindungsgemässe Anordnung zum berührungslosen Messen einer Temperatur von einem Körper zeichnet sich nach dem kennzeichnenden Teil von Anspruch 13 aus.

Vorzugsweise wird der zweite oder ein weiterer Temperatursensor mit einem Gehäuse des ersten Temperatursensors und/oder mit dem Zerhacker thermisch eng gekoppelt, gemäss Anspruch 14 bzw. 15.

Eine einfache Konstruktion der Anordnung ergibt sich gemäss Anspruch 16 dadurch, dass der Zerhacker ein mechanisch bewegter Zerhacker ist, wie eine Zerhackerscheibe, mit einer Vielzahl wärmestrahlungsundurchlässiger und -durchlässiger Segmente, und dass der zweite Temperatursensor unmittelbar im Bereiche der Zerhackerbewegungsbahn angeordnet ist.

Es hat sich gezeigt, dass gerade bei Vorsehen eines derartigen Zerhackers wegen seiner Reibungsarbeit in der Umgebungsluft relativ lange Zeiträume, von einer bis mehreren Stunden, verstreichen können, bis die Zerhackerumgebungsluft und damit auch die vom Zerhackerbereich auf den ersten Sensor abgegebene Wärmestrahlung einen stabilen Wert erreicht hat.

Da es in vielen Anwendungsfällen wesentlich ist, repräsentative Messung unmittelbar nach Aufschalten einer derartigen Anordnung vornehmen zu können, ist die obgenannte Anordnung des zweiten Temperatursensors im Bereiche der Zerhackerbewegungsbahn äusserst günstig, womit nämlich durch entsprechende Berücksichtigung der mit diesem Sensor erfassten zeitvariablen Temperatur für das Messresultat ermöglicht wird, unmittelbar nach Aufschalten der Anordnung bereits repräsentativ zu messen.

Obwohl, wie erwähnt, das zeitvariable Verhalten der Strahlung durch Vorsehen mehrerer Regelkreise eliminiert werden kann, ist doch der Aufwand hierfür relativ gross, insbesondere wenn man berücksichtigt, dass als Temperaturstellglieder heizende und/oder kühlende Organe, wie Peltierelemente, vorgesehen werden müssen und zudem derartige Regelkreise, wie auch erwähnt wurde, träge sein können.

Deshalb wird vorgeschlagen, nach Anspruch 17 vorzugehen.

Eine bevorzugte Ausbildung einer derartigen Auswerteeinheit für die Verrechnung des Ausgangssignals eines weiteren Temperatursensors im Bereiche des Zerhackers mit dem Ausgangssignal des ersten Temperatursensors für die Körpertemperatur ist in den Ansprüchen 18 und 19 wiedergegeben.

Insbesondere wenn, wie oben abgehandelt, an einem auszumessenden Körper eine Einbuchtung vorgesehen wird und derartige Körper relativ zum Temperatursensor bewegt werden, ist es wesentlich, ein Kriterium bereitzustellen, das angibt, wann eine Temperaturmessung bezüglich des bewegten Körpers am richtigen Ort, d.h. im Bereiche der Einbuchtung, stattfindet und wann nicht. Dies wird bevorzugterweise gemäss Anspruch 21 gelöst.

Da bei einem mit einer Einbuchtung im obgenannten Sinne versehenen Körper, solange die Einbuchtung noch nicht im Messbereich des Sensors liegt, nur dessen Oberflächenstrahlung messwirksam ist und, wenn die Einbuchtung in den Messbereich einläuft, plötzlich ändert, ermöglicht die genannte schwellwertsensitive Einheit zu detektieren, ab wann die erwähnte Einbuchtung im Messbereich des Sensors liegt.

Bevorzugterweise wird dabei Sensor und schwellwertsensitive Einheit nach Anspruch 22 ausgebildet, womit Strahlungsänderungen bzw. -Flanken die Messung auslösen, unabhängig von den vorherrschenden Temperaturpegeln.

Die Erfindung wird anschliessend beispielsweise anhand von Figuren erläutert.

Es zeigen:

Fig. 1     schematisch die Anordnung eines Temperatursensors zum berührungslosen Messen der Temperatur von einem Körper, mit den Auswirkungen der Umgebungsstrahlung,

Fig. 2a     Verhältnisse analog zu denjenigen in Fig. 1, bei Zerhacken der Wärmestrahlung zwischen einem Körper und dem Temperatursensor,

Fig. 2b     quantitativ das bei einer Anordnung gemäss Fig. 2a resultierende Sensorausgangssignal, mit den Abhängigkeiten von den verschiedenen Strahlungen,

Fig. 3     schematisch an einer Anordnung gemäss Fig. 2a den thermisch zu beherrschenden Bereich an der Sensor-Zerhackeranordnung,

Fig. 4     anhand einer Darstellung gemäss Fig. 2a schematisch relevante Temperaturmessstellen, zur Beherrschung der Temperatur- bzw. Wärmestrahlungsverhältnisse im Bereich gemäss Fig. 3,

Fig. 5     eine Anordnung gemäss Fig. 4, mit Temperaturregelung des Gehäuses für den Körperstrahlungssensor und Korrektur des Messignals in Funktion einer von Zerhackerarbeit bewirkten Strahlung,

Fig. 6     eine Darstellung analog zu Fig. 5, jedoch mit temperaturgeregeltem Zerhacker und Korrektur des Messignals in Funktion der Gehäusetemperatur des Körperstrahlungssensors,

Fig. 7     schematisch eine Anordnung gemäss Fig. 5 mit dem Aufbau einer Auswerteeinheit, dargestellt anhand von Funktionsblöcken,

Fig. 8     anhand von Funktionsblöcken die Aufbereitung des Sensorausgangssignals sowie die Detektion, wann ein auszumessender Körper mit vorgesehener Einbuchtung in messrelevante Position kommt.

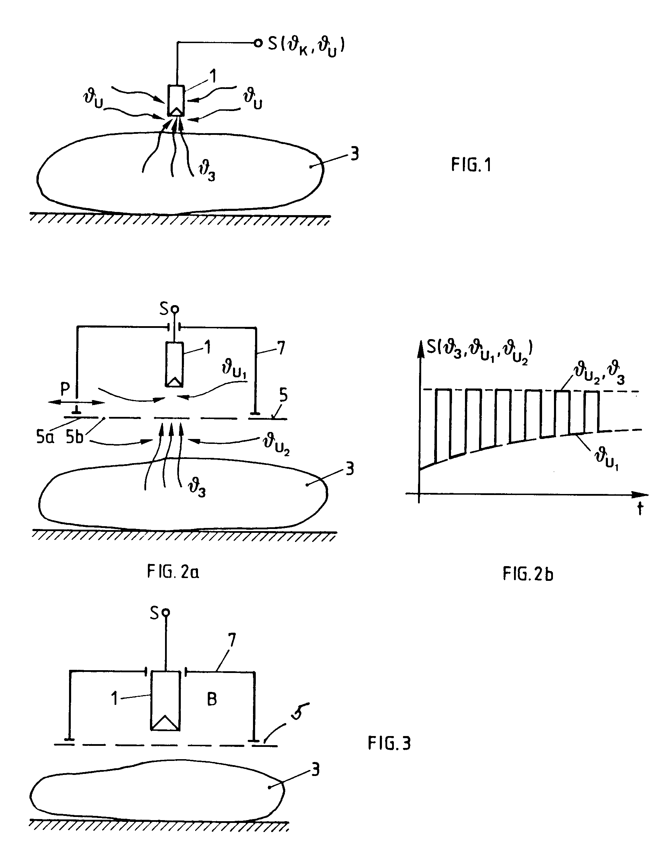

In Fig. 1 ist ein beispielsweise als pyroelektrischer Detektor ausgebildeter Temperatursensor 1 dargestellt, der berührungslos im Bereich eines Körpers 3 angeordnet ist. Der Sensor 1 wirkt üblicherweise als thermisch elektrischer Wandler und gibt, ausgangsseitig, ein Signal S ab, in der gezeigten Anordnung in Funktion einer Körpertemperatur bzw. -Strahlung $\vartheta_3$ sowie der Umgebungsstrahlung entsprechend einer Temperatur $\vartheta_u$. Ist nun die Strahlung des Körpers 3 nicht wesentlich unterschiedlich von der Umgebungsstrahlung, indem seine Temperatur, beispielsweise unter 100° C, bei einer Umgebungstemperatur von 20° C liegt, so beeinflusst die Umgebungsstrahlung die Messgenauigkeit in unzulässigem Mass. Dies insbesondere dann, wenn aus nachfolgend noch zu beschreibenden Gründen die Umgebungsstrahlung nicht konstant, sondern zeitvariant ist.

Gemäss Fig. 2a wird nun zwischen dem auszumessenden Körper 3 mit der Strahlung entsprechend $\vartheta_3$ und dem Sensor 1 ein Wärmestrahlungszerhacker 5 angeordnet, beispielsweise ein mechanischer Zerhacker, mittels welchem wärmestrahlungsundurchlässige Segmente 5a abwechselnd mit wärmestrahlungsdurchlässigen Segmenten 5b, wie mit dem Pfeil p angegeben, zwischen dem Sensor 1 und dem Körper 3 durchbewegt werden. Die Umgebungsstrahlung bezüglich des Zerhackers 5, sensor-1-seitig ist mit $\vartheta_{u1}$ bezeichnet, die Umgebungsstrahlung bezüglich des Zerhackers 5, körper-3-seitig mit $\vartheta_{u2}$. Qualitativ erscheint am Ausgang des Sensors 1 das in Fig. 2b dargestellte Signal. Ist die Strahlung zwischen Körper 3 und Sensor 1 durch ein Segment 5a des Zerhackers 5 unterbrochen, so entspricht der vom Sensor 1 detektierte Strahlungspegel, der in Fig. 2b dargestellten unteren Umhüllenden $\vartheta_{u1}$ entsprechend der Strahlung $\vartheta_{u1}$. Ist die Strahlung zwischen Körper 3 und Sensor 1 durch ein Segment 5b freigegeben, so entspricht die detektierte Strahlung einem Wert, der sich aus der Umgebungsstrahlung entsprechend $\vartheta_{u2}$ und der Körperstrahlung $\vartheta_3$ ergibt. Während die Umgebungsstrahlung $\vartheta_{u2}$ körperseits dadurch reduziert werden kann, dass der Zerhacker 5 möglichst nahe an den Körper 3 positioniert wird, ist die Umgebungsstrahlung $\vartheta_{u1}$ sensorseitig wesentlich problematischer zu beherrschen. Ueblicherweise ist eine, wie in Fig. 2a schematisch dargestellte Anordnung in einem schematisch dargestellten Gehäuse 7 untergebracht, derart, dass bei Inbetriebsetzen einer derartigen Anordnung relativ lange Zeiträume verstreichen können, bis das Innere des Gehäuses 7 generell schlecht belüfteter Räume und somit die Strahlung entsprechend $\vartheta_{u1}$

sich stabilisiert haben.Dies führt, wie in Fig. 2b dargestellt, zu einem zeitvariablen Amplitudenverhalten des Ausgangssignals S, auch wenn die Körperstrahlung entsprechend $\vartheta_3$ konstant ist. Während die Umgebungsstrahlung entsprechend $\vartheta_{u2}$ in vielen Fällen mit genügender Genauigkeit als konstant angenommen werden kann, ist dies für die Strahlung entsprechend $\vartheta_{u1}$, insbesondere während der thermischen Einschwingzeit, nicht möglich, eine Zeitspanne, die mehrere Stunden dauern kann. Deshalb ist es für eine genaue Temperaturmessung von grosser Wichtigkeit, die Verhältnisse sensorseitig des Zerhackers 5 zu kennen, zu berücksichtigen oder zu beeinflussen, damit, wie in Fig. 3 schematisch dargestellt ist, innerhalb des, wie durch ein Gehäuse 7 festgelegten sensorseitigen Bereiches B konstante Strahlungsverhältnisse vorliegen oder, falls nicht, die wesentlichsten Strahlungsbeiträge aus diesem Raum bekannt sind und bei der Auswertung des Detektorausgangssignals S berücksichtigt werden können.

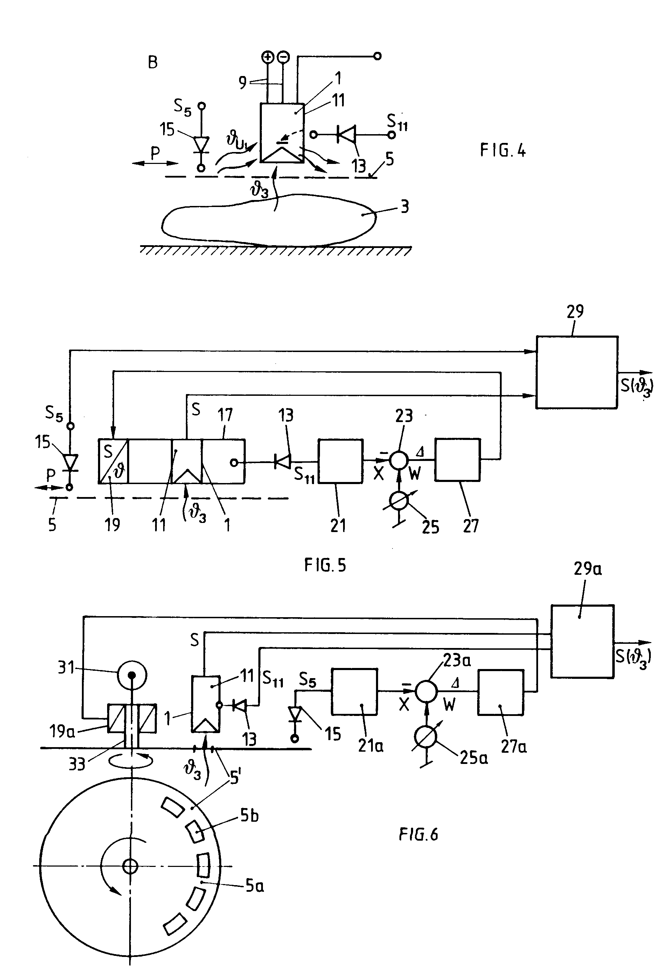

Für die Umgebungsstrahlung entsprechend der Temperatur $\vartheta_{u1}$ sensorseitig des Zerhackers 5 sind vornehmlich zwei Strahlungsquellen verantwortlich. Erstens der, wie in Fig. 4 dargestellt üblicherweise über Speiseleitungen 9 elektrisch gespiesene Sensor 1 mit üblicherweise integriertem Verstärker, somit sein Gehäuse 11, und zweitens der Zerhacker 5, insbesondere wenn es sich, wie dargestellt mit dem Pfeil p, um einen mechanischen Zerhacker handelt. Während das Gehäuse 11 des integrierten Sensors 1 nach innen auf das pyrotechnisch sensible Halbleiterelement strahlt, ergibt die mechanische Bewegung des Zerhackers 5 in der Umgebungsluft Reibungswärme, die im mehr oder weniger geschlossenen, relativ kleinräumigen System mit mechanischen Befestigungsorganen und einer Ummantelung, analog zum Gehäuse 7 der Fig. 2a und 3 zu etlichen Grad Temperaturanstieg nach Inbetriebsetzen der Anordnung in den ersten paar Stunden führen kann.

Wie in Fig. 4 dargestellt, wird deshalb ein erster Korrektur-Temperatur-Sensor 13 mit dem Sensorgehäuse 11 thermischeng gekoppelt und ein weiterer Korrektur-Temperatur-Sensor 15 mit dem Zerhacker 5 bei einem mechanischen Zerhacker so, dass der Sensor 15 unmittelbar im Bereich der Bewegungsbahn des Zerhackers 15 angeordnet wird, derart, dass er die Temperatur der Umgebungsluft des Zerhackers misst.

Die üblicherweise als thermisch elektrische Wandler ausgebildeten Sensoren 13 und 15 geben, entsprechend, Signale $S_{11}$, repräsentativ für die Gehäusetemperatur, bzw. $S_5$ repräsentativ für die Umgebungsluft-Temperatur des Zerhackers 5, ab.

In Fig. 5 ist nun schematisch eine erste Variante dargestellt, wie die Signale der Sensoren 1, 13 und 15 erfindungsgemäss ausgewertet werden.

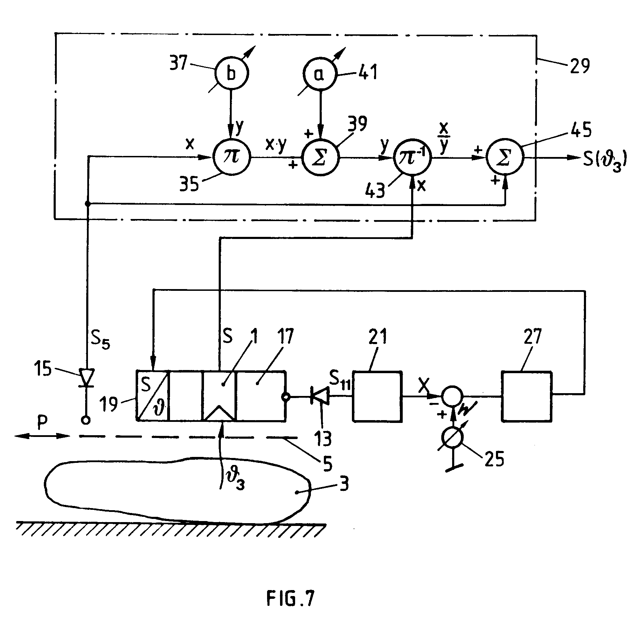

Der Messensor 1 wird, wie schematisch dargestellt, in einem relativ grossvolumigen, thermisch gut leitenden, beispielsweise Metallkörper 17 eingebettet, an welchem einerseits der Sensor 13, thermisch eng gekoppelt ist und anderseits ein Temperaturstellglied 19, wie ein Peltierelement. Das von der Gehäusetemperatur des Gehäuses 11 abhängige Ausgangssignal $S_{11}$ des Sensors 13 wird allenfalls an einer Einheit 21 aufbereitet und verstärkt, danach als Regelgrösse X einer Differenzeinheit 23 zugeführt. Letzterer wird an einem Stellgrösseneingang W einem einstellbaren Soll- bzw. Führungs-Wert W zugeführt, einstellbar an einer einstellbaren signalquelle 25. Ein Regeldifferenzsignal $\Delta$ wird über einen Regler 27 dem Temperaturstellglied 19, wie einem Peltierelement, zugeführt, so dass die Temperatur des Blockes 17 auf einen Wert entsprechend dem an der Einheit 25 eingestellten Soll-Wert W gestellt wird. Damit wird die Gehäusetemperatur des Gehäuses 11 zeitkonstant geführt und ist bekannt. Wegen der relativ geringen Trägheit von Gehäuse 11 und Block 17 auf Temperaturänderungen, kann die thermische Stabilität des Gehäuses 11 rasch erzielt werden, so dass nach Aktivierung der gezeigten Anordnung vorerst einmal bezüglich Fehler, die durch thermische Unstabilitäten des Gehäuses 11 hervorgerufen werden, rasch eine relevante Messung vorgenommen werden kann. Bei dieser bevorzugten und weiter unten auch detailliert beschriebenen Ausführungsvariante wird nun der Ausgang $S_5$ des Sensors 15, welcher die durch die Arbeit des Zerhackers 5 bewirkte Temperaturänderung erfasst, zusammen mit dem Ausgang S des Messensors 1 einer Auswerteeinheit 29 aufgeschaltet, an deren Ausgang ein Signal $S(\vartheta_3)$ erscheint, welches für die Strahlung des Körpers 3 repräsentativ ist und aus Verrechnung des Messensorausgangssignals S und des Ausgangssignals $S_5$ des Sensors 15 bestimmt wird. Bezüglich der Realisation der Auswerteeinheit wird auf Fig. 7 verwiesen, die weiter unten beschrieben ist.

In Fig. 6 ist eine weitere Ausführungsvariante dargestellt, bei der nun die Temperatur im Bereiche der Zerhacker-Bewegungsbahn geregelt wird. Als Zerhacker wird üblicherweise und zum Erhalt hoher Zerhackerfrequenzen nicht nur bei der Ausführungsvariante gemäss dieser Figur, sondern, falls ein mechanischer Zerhacker eingesetzt wird, auch in den übrigen Ausführungsvarianten, eine mittels eines Motors 31 getriebene Zerhackerscheibe 5', welche wärmestrahlungsundurchlässige Segmente 5a und strahlungsdurchlässige Segmente 5b aufweist, eingesetzt. Bei dieser Ausführungsvariante ist nun der Ausgang des Sensors 15, welcher die Temperatur unmittelbar im Bereiche der Zerhacker-5'-Bewegungsbahn misst, allenfalls nach Verstärkung und Aufbereitung an einer Einheit 21a als Regelgrössensignal X auf eine Differenzeinheit 23a geführt, deren zweitem Eingang, in Analogie zu Fig. 5, ein Führungs- bzw. Soll-Wertsignal W zugeführt ist, das an einer einstellbaren Signalquelle 25a einstellbar ist. Das ausgangsseitig der Differenzeinheit 23a erscheinende Regeldifferenzsignal Δ wird über einen Regler 27a einem Temperaturstellglied 19a zugeführt, wie beispielsweise einem auf die thermisch mit der Zerhackerscheibe 5' eng gekoppelten Scheibenachse 33 wirkenden Peltierelement. Dieser Regelkreis ist normalerweise träger als der in Fig. 5 dargestellte, bedingt durch die thermische Uebertragungs-Trägheit zwischen Achse 33 und der Peripherie der Scheibe 5', wo sich wegen der hohen Umfangsgeschwindigkeit auch die höchsten Umgebungstemperaturen einstellen, so dass auch aus Regelungs-Stabilitätsgründen der Raschheit dieses Regelkreises Grenzen gesetzt sind.

Trotzdem kann in gewissen Anwendungsfällen und bei entsprechend kleiner Dimensionierung der Zerhackeranordnung diese Anordnung gewählt werden, allenfalls zusätzlich zu einer Regelung gemäss Fig. 5, insbesondere dann, wenn ein optoelektrischer Zerhacker, wie eine Kerr-Zelle, eingesetzt wird.

Hier und wie in Fig. 6 dargestellt, wird der Ausgang $S_{11}$ des Temperatursensors 13, welcher die Temperatur des Sensorgehäuses 11 misst, mit dem Ausgang S des Messsensors 1 auf eine Auswerteeinheit 29a geführt, an deren Ausgang ein Signal $S(\vartheta_3)$ erscheint, das repräsentativ ist für die Körperstrahlung $\vartheta_3$.

In Fig. 7 ist anhand von Funktionsblöcken und ausgehend von der Ausführungsvariante gemäss Fig. 5 die Auswerteeinheit 29 dargestellt.

Mindestens in erster Näherung wird für die Körpertemperatur $\vartheta_3$ entsprechend der Körperstrahlung von folgendem Ausdruck ausgegangen:

$$\vartheta_3 = \frac{\vartheta_1}{a + b\,\vartheta_5} + \vartheta_5$$

wobei bezeichnen:

$\vartheta_3$:   die aufgrund der Wärmestrahlung des Körpers 3 am Ort des Sensors 1 vorherrschende Temperatur

$\vartheta_1$:   die mit dem Sensor 1 gemessene Temperatur, entsprechend S

$\vartheta_5$:   die in unmittelbarem Bereich der Bewegungsbahn des Zerhackers 5 mittels des Sensors 15 gemessene Temperatur, entsprechend $S_5$

a, b:   experimentell zu bestimmende Koeffizienten resp. Konstanten, die von der Beschaffenheit des Körpers 3 sowie der Anordnung von Zerhacker 5, Sensor 1 und im Sensor/Zerhackerbereich vorgesehener weiterer Vorkehrungen abhängen.

Entsprechend diesem Ausdruck wird das Ausgangssignal des Sensors 15 an der Auswerteeinheit 29 erst einer Multiplikationseinheit 35 zugeführt, deren zweitem Eingang der einstellbare Koeffizient b, als Verstärkungsfaktor zugeführt ist. Der Koeffizient b wird an einer Einstelleinheit 37 eingestellt und dort gespeichert. Der Ausgang der Multiplikationseinheit 35 wird einer Additionseinheit 39 zugeführt, deren zweitem Eingang die Grösse a, an einer Einstelleinheit 41 einstellbar, zugeführt ist. Der Ausgang der Additionseinheit 39 wird dem Nennereingang einer Divisionseinheit 43 zugeführt, derem Zählereingang das Ausgangssignal des Sensors 1 zugeführt ist. Schliesslich wird das Ausgangssignal der Divisionseinheit 43 an einer Summationseinheit 45 dem Ausgangssignal des Sensors 15 hinzuaddiert; ausgangsseitig der Additionseinheit 45 erscheint ein für die der Körperstrahlung entsprechende Temperatur $\vartheta_3$ repräsentatives Signal $S(\vartheta_3)$.

Die Koeffizienten a und b in der oben angegebenen Gleichung, die an der Auswerteeinheit 29 eingestellt werden, werden beispielsweise experimentell so bestimmt, dass bei mindestens zwei vorgegebenen, konstanten Körpertemperaturen des Körpers 3 bei je zwei unterschiedlichen, mittels des Sensors 15 erfassten Temperaturen im Zerhackerbereich, mittels der einstellbaren Einheiten 37 und 41 das Ausgangssignal der Auswerteeinheit 29 so eingestellt wird, dass das dann erscheinende Signal unabhängig von den mittels des Sensors 15 erfassten Temperaturen, die jeweilige Körpertemperatur anzeigt. Zwei unterschiedliche, mittels des Sensors 15 erfasste Temperaturen werden beispielsweise dadurch erzeugt, dass eine erste Messung unmittelbar nach Inbetriebsetzen des Zerhackers 5 und eine jeweilige zweite Messung nach thermischer Stabilisierung der mittels besagten Sensors 15 erfassten Temperatur vorgenommen wird.

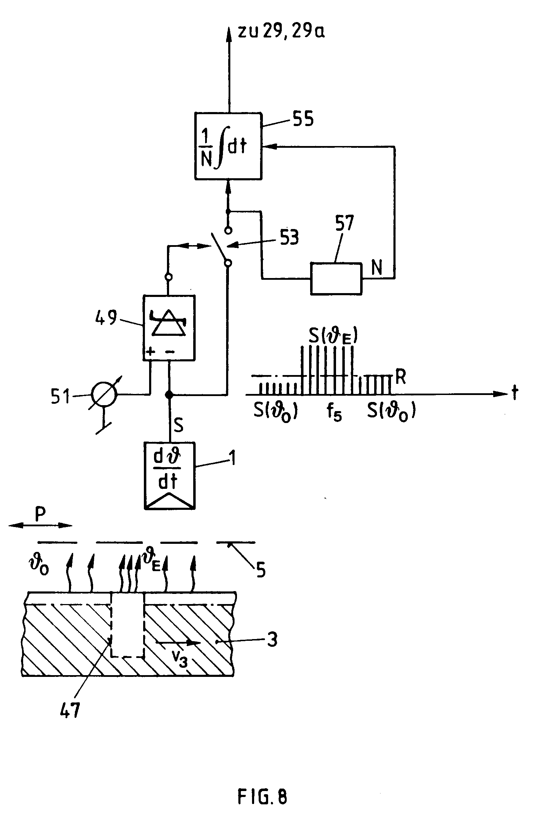

Eine, wie bis anhin beschriebene, relativ genaue Temperaturmessung der Wärmestrahlung von einer Körperoberfläche her, ist, wenn der Körper nicht isotherm ist, nur repräsentativ für den thermischen Energieinhalt eines relativ kleinen Volumenelementes um diejenige Körperstelle, die gerade im Bereiche des Messsensors 1 liegt. In vielen Anwendungsfällen wäre es aber erwünscht, mit einer derartigen Temperaturmessung eine Aussage über den thermischen Energieinhalt eines wesentlich grösseren Volumenelementes zu erhalten, bezogen auf die Position des Körpers bezüglich des Sensors 1. Dies kann auf einfache Art und Weise bei all den beschriebenen Verfahrensvarianten dadurch erreicht werden, dass, wie in Fig. 8 dargestellt, eine Einnehmung, wie eine Bohrung 47 in den Körper 3 eingelassen wird. Die Bohrung strahlt thermisch wie ein schwarzer Körper und ist somit repräsentativ für den thermischen Energieinhalt eines wesentlich grösseren Volumenelementes des Körpers als wenn lediglich dessen Oberflächenstrahlung detektiert wird. Dies auzunützen ist beispielsweise bei der Messung des thermischen Energiezustandes von Dosenkörpern ausserordentlich vorteilhaft, die auf einer Herstellungslinie, wenn sie an die Temperaturmesstelle gelangen, thermisch noch nicht ausgeglichen sind, was eine Verkürzung der Produktionsstrasse erlaubt, wenn nicht abgewartet werden muss, bis die Dosenkörper isotherm sind. In diesem Fall wird die Oeffnung im Dosenkörper direkt als die erwähnte Einnehmung ausgenützt und berührungslos im Bereich der Dosenkörperöffnung die Temperatur in beschriebener Art und Weise gemessen.

In Fig. 8 ist eine unmittelbar dem Sensor 1 nachgeschaltete Signalaufbereitung/Auswertung dargestellt, die es erlaubt, zu detektieren, wann ein derartig bezüglich des Sensors 1 bewegter Körper messrelevant im Bereich des Sensors 1 erscheint. Der, wie mit dem Pfeil $\vartheta_3$ angegeben, bewegte Körper 3, zur Feststellung seines thermischen Energieinhaltes mittels einer Temperaturmessung der beschriebenen Art, mit der Einnehmung 47 versehen, gibt an seiner Oberfläche eine Wärmestrahlung entsprechend $\vartheta_o$ ab, die für den thermischen Energieinhalt der Oberflächenzone, wie qualitativ strichpunktiert dargestellt, repräsentativ ist. Im Bereich der Einnehmung 47 gibt der Körper 3 die Strahlung entsprechend $\vartheta_E$ ab, die repräsentativ ist für den thermischen Energieinhalt eines grösseren Körpervolumenelementes, wie qualitativ schraffiert dargestellt. Mit dem auch in Fig. 8 schematisch dargestellten Zerhacker 5 wird die Körperstrahlung zerhackt und trifft auf den Sensor 1 auf. Als Sensor 1 wird üblicherweise ein pyroelektrischer Detektor eingesetzt, der nicht auf zeitlich stationäre Strahlungswerte, sondern auf Strahlungsänderungen pro Zeiteinheit reagiert. Auch deshalb ist das Vorsehen des Zerhackers für die Messung sich zeitlich nicht ändernder Körperstrahlungen wesentlich. Am Ausgang des Sensors 1 erscheinen, mit der Zerhackerfrequenz $f_5$, die qualitativ dargestellten Impulse, die, sobald die Einnehmung 47 im Bereiche des Sensors 1 ankommt, höher oder tiefer sind, als wenn lediglich die Oberfläche und somit die Strahlung entsprechend $\vartheta_o$ im Sensorbereich liegt.

Mit Hilfe einer, dem Sensor 1 nachgeschalteten, schwellwert-sensitiven Einheit 49, wie eines Komparators, mit an einer Einstelleinheit 51 einstellbarem Schwellwert R, wird festgestellt, ab wann die Ausgangsimpulse des Sensors 1 von einem der Oberflächenstrahlung entsprechend $\vartheta_o$ entsprechenden Wert abweichen. Dann wird durch die schwellwert-sensitive Einheit 49 ein Schaltorgan 53 geschlossen und die ab dann auftretenden Impulse $S(\vartheta_E)$ einer Mittelwerts-Bildungseinheit 55 aufgeschaltet, welche beispielsweise ein Integrationselement umfasst, in welcher die Werte der nun empfangenen Impulse aufaddiert werden und das Resultat durch die Anzahl N empfangener Impulse dividiert wird, welch letztere, beispielsweise mittels eines Zählers 57, erfasst wird. Das Resultat des an der Einheit 55 gebildeten Mittelwertes wird gemäss Fig. 7, 6 oder 5 der entsprechend vorgesehenen Auswerteeinheit 29 bzw. 29a zugeführt. Die Zerhackerperiode, invers zur Zerhackerfrequenz $f_5$, wird so gewählt, dass sie wesentlich kürzer ist als die Zeitspanne, während welcher, bei einer gegebenen Geschwindigkeit $v_3$ des Körpers, die Einnehmung 47 im Bereich des Sensors 1 vorliegt. Durch die Mittelwertsbildung an der Einheit 55 werden zufallsbedingte Schwankungen der Impulse entsprechend $S(\vartheta_E)$ ausgemittelt. Im weiteren erlaubt die schwellwertsensitive Einheit 49 die Anordnung genau dann messaktiv zu schalten, über den Schalter 53, wenn der Körper 3 in messrelevanter Position liegt.

Mit dem beschriebenen, erfindungsgemässen Verfahren und der beschriebenen, erfindungsgemässen Anordnung lässt sich berührungslos die Temperatur entsprechend der thermischen Strahlung eines Körpers genau messen und diese genaue Temperaturmessung zur Ausmessung des thermischen Energieinhaltes eines grossen Körpervolumenelementes, durch Vorsehen einer Einnehmung im Körper ausnützen, womit das Verfahren und die Anordnung es ermöglichen, beispielsweise an nicht isothermen Hohlkörpern, wie Dosen auf einer Produktionsstrasse, mit einer einzigen Temperaturmessung einen repräsentativen Wert für deren thermischen Energieinhalt zu erhalten, was beispielsweise bei der Dichteprüfung derartiger Dosenkörper wichtig ist, wo leckagerelevante Druckabfälle von temperaturänderungsbedingten Druckabfällen getrennt werden müssen, m.a.W. eine Temperaturkompensation des dort messrelevanten Druckes vorgenommen werden muss.

## Patentansprüche

1. Verfahren zum berührungslosen Messen einer Temperatur von einem Körper, bei dem man
   - die Wärmestrahlung zwischen dem Körper (3) und einem Temperatursensor (1) mittels eines Zerhackers (5) zerhackt,
   - mindestens eine Umgebungstemperatur des Sensors auf der dem Sensor (1) zugewandten Seite des Zerhackers (5) erfasst, dadurch gekennzeichnet, dass man die erfasste Temperatur im Bereiche des Zerhackers (5) mittels eines Temperaturregelkreises mit einem Temperaturstellglied, das auf den Sensor (1) wirkt, auf einen vorgegebenen Wert regelt (21a, 27a, 19a).

2. Verfahren nach Anspruch 1, dadurch gekennzeichnet, dass man die Temperatur des Sensorgehäuses (11, $S_{11}$) erfasst.

3. Verfahren nach einem der Ansprüche 1 oder 2, dadurch gekennzeichnet, dass man eine durch mechanische Arbeit des Zerhackers (5) beeinflusste Temperatur erfasst.

4. Verfahren nach Anspruch 2, dadurch gekennzeichnet, dass man die Temperatur des Sensorgehäuses (11) auf einen vorgegebenen Wert regelt (13, 21, 27, 19).

5. Verfahren nach einem der Ansprüche 1 bis 4, dadurch gekennzeichnet, dass man die Wärmestrahlung mittels eines mechanisch bewegten Zerhackers (5, 5') zerhackt und die Temperatur im Bereich der Zerhackerbewegungsbahn ($S_5$) regelt.

6. Verfahren nach einem der Ansprüche 1 bis 5, dadurch gekennzeichnet, dass man eine Temperatur im Bereich des Zerhackers (5, 5') misst und die mittels des Sensors (1) gemessene Temperatur (S) in Funktion letzterer ($S_5$) korrigiert (29).

7. Verfahren nach Anspruch 6, dadurch gekennzeichnet, dass man ein von der durch den Zerhacker bewirkten Temperatur ($S_5$) abhängiges erstes Signal mit einem ersten Koeffizienten (b) multipliziert, das Resultat zu einem zweiten (a) addiert, zum Erhalt eines zweiten Signals, dann ein von der mittels des Sensors (1) erfassten Temperatur abhängiges drittes Signal (S) durch das zweite dividiert, zum Erhalt eines vierten Signals, und das vierte Signal zum ersten ($S_5$) hinzuaddiert, zum Erhalt eines für die Körperstrahlung repräsentativen Signals ($S\vartheta_3$).

8. Verfahren nach einem der Ansprüche 1 bis 7, dadurch gekennzeichnet, dass man das Sensorausgangssignal (S) vor einer Weiterauswertung über mehrere Zerhackerperioden ($\frac{1}{f_5}$) mittelt (55).

9. Verfahren nach einem der Ansprüche 7 oder 8, dadurch gekennzeichnet, dass man den ersten und zweiten Koeffizienten (b, a) aus mindestens zwei Messungen bei vorgegebenen Körpertemperaturen ($\vartheta_3$) und je zwei Werten der durch den Zerhacker bewirkten Temperatur ($S_5$) experimentell bestimmt und abspeichert (41, 37).

10. Verfahren nach einem der Ansprüche 1 bis 9, dadurch gekennzeichnet, dass man zur Vergrösserung eines Körpervolumenelementes, für dessen thermischen Energieinhalt die Temperaturmessung repräsentativ ist, die Temperaturmessung mittels des Sensors (1) im Bereich einer bereits vorgesehenen oder einer dazu angebrachten Einbuchtung (47) am Körper (3) vornimmt.

11. Verfahren nach Anspruch 10 für relativ zum Sensor (1) bewegte Körper (3), dadurch gekennzeichnet, dass man die Zerhackerperiode ($\frac{1}{f_5}$) kleiner wählt als die Zeitspanne, während welcher die Einbuchtung (47) im Sensor-(1)-Messbereich ist.

12. Verfahren nach einem der Ansprüche 1 bis 11, dadurch gekennzeichnet, dass der Körper, dessen Temperatur berührungslos gemessen wird, ein Dosenkörper ist.

13. Anordnung zum berührungslosen Messen einer Temperatur von einem Körper (3) mit
   - einem ersten Temperatursensor (1),
   - einem dem Wärmeeingang des ersten Temperatursensors (1) vorgeschalteten Wärmestrahlungszerhacker (5),
   - mindestens einem zweiten Temperatursensor (13, 15) im Bereich des Zerhackers (5) und/oder des ersten Temperatursensors (1),

dadurch gekennzeichnet, dass der zweite Temperatursensor (15, 11) als Regelgrössenaufnehmer (X) in einem Temperaturregelkreis geschaltet ist, der die Temperatur im Bereich des Zerhackers regelt.

14. Anordnung nach Anspruch 13, dadurch gekennzeichnet, dass der zweite oder ein weiterer Temperatursensor (13) mit einem Gehäuse (11) des ersten Temperatursensors (1) thermisch eng gekoppelt ist.

15. Anordnung nach einem der Ansprüche 13 oder 14, dadurch gekennzeichnet, dass der zweite oder ein weiterer Temperatursensor (15) mit dem Zerhacker (5) thermisch eng gekoppelt ist.

16. Anordnung nach einem der Ansprüche 13 bis 15, dadurch gekennzeichnet, dass der Zerhakker (5) ein mechanisch bewegter Zerhacker ist und der zweite Temperatursensor (15) unmittelbar im Bereich der Zerhakkerbewegungsbahn angeordnet ist.

17. Anordnung nach einem der Ansprüche 13 bis 16, dadurch gekennzeichnet, dass eine Auswerteeinheit (29, 29a) vorgesehen ist, der die Ausgänge mindestens des ersten und eines weiteren Temperatursensors (1, 13, 15) zugeführt sind und die ausgangsseitig ein für die Körpertemperatur ($\vartheta_3$) repräsentatives Signal ($S(\vartheta_3)$) abgibt.

18. Anordnung nach Anspruch 17, dadurch gekennzeichnet, dass der weitere Temperatursensor (15) im Bereich des Zerhackers (5) angeordnet ist, dem Eingang für diesen weiteren Temperatursensor (15) an der Auswerteeinheit (29) eine Multipliziereinheit (35) nachgeschaltet ist, deren zweiten Eingang ein Signal einstellbaren Wertes (37, b) zugeschaltet ist, dass der Ausgang der Multipliziereinheit (35) einer Summationseinheit (39) zugeführt ist, derem zweiten Eingang einstellbaren Wertes zugeschaltet ist (41, a), dass der Ausgang des ersten Temperatursensors (1) an der Auswerteeinheit einem Zählereingang einer Dividiereinheit (43) zugeführt ist, deren Nennereingang das Ausgangssignal der Summationseinheit (39) zugeführt ist, und dass der Ausgang der Dividiereinheit (43) sowie der Ausgang des weiteren Temperatursensors (15) auf eine Summationseinheit (45) geführt sind, deren Ausgang auf den Ausgang der Auswerteeinheit (29) geführt ist.

19. Anordnung nach Anspruch 18, dadurch gekennzeichnet, dass dem zweiten Eingang der Multipliziereinheit (35) und der ihr nachgeschalteten Summationseinheit (39) Speicherorgane für die Signale (a, b) einstellbaren Wertes zugeschaltet sind (37, 41).

20. Anordnung nach einem der Ansprüche 13 bis 19, dadurch gekennzeichnet, dass dem ersten Temperatursensor (1) eine Mittelwert-Bildungseinheit (55) nachgeschaltet ist, deren Mittelungszeit (N) länger als die Zerhackerperiode ($\frac{1}{f_5}$) ist.

21. Anordnung nach einem der Ansprüche 13 bis 20, dadurch gekennzeichnet, dass dem ersten Sensor (1) eine schwellwert-sensitive Einheit (49) nachgeschaltet ist, deren Ausgang den Ausgang des ersten Sensors (1) mit einem Ausgang der Anordnung wirkverbindet (53), wenn der Wert des Sensorausgangssignals (S) über oder unter einem vorgegebenen Pegel (R) liegt.

22. Anordnung nach Anspruch 21, dadurch gekennzeichnet, dass die schwellwert-sensitive Einheit (49) bzw. der Sensor (1) auf eine vorgegebene Aenderung der mittels des Sensors (1) detektierten Wärmestrahlung pro Zeiteinheit anspricht.

23. Anordnung nach einem der Ansprüche 13 bis 22, dadurch gekennzeichnet, dass der Körper, dessen Temperatur berührungslos gemessen wird, ein Dosenkörper ist.

**Claims**

1. A method of contactless measuring the temperature of a body, comprising
   - chopping the heat radiation between the body (3) and a temperature detector (1) by means of a chopper (5), and
   - detecting at least one ambient temperature of the detector on the side of the chopper (5) facing towards the detector (1),
   characterized by setting (21a, 27a, 19a) the temperature detected in the region of the chopper (5) to a predetermined value by means of a temperature adjustment circuit comprising a temperature adjustment device acting on the detector (1).

2. The method according to claim 1, characterized by detecting the temperature of the detector housing (11, $S_{11}$).

3. The method according to claim 1 or 2, characterized in detecting a temperature influenced by a mechanical operation of the chopper (5).

4. The method according to claim 2, characterized by setting (13, 21, 27, 19) the temperature of the detector housing (11) to a predetermined value.

5. The method according to any of claims 1 to 4, characterized by chopping the heat radiation by means of a mechanically driven chopper (5, 5'), and setting the temperature in the region of the chopper travel path ($S_5$).

6. The method according to any of claims 1 to 5, characterized in measuring a temperature in the region of the chopper (5, 5') and correcting (29) the detector (1) measured temperature (S)

9

according to the latter ($S_5$).

7. The method according to claim 6, characterized by multiplying a first signal, which is dependent on the chopper induced temperature ($S_5$) by a first coefficient (b), adding the result to a second coefficient (a) to obtain a second signal, then dividing a third signal (S), which is dependent on the temperature detected by detector (1) by the second signal to obtain a fourth signal, and adding said fourth signal to first signal ($S_5$) so as to obtain a signal ($S\vartheta_3$), which is representative of the body radiation.

8. The method according to any of claims 1 to 7, characterized by averaging (55) the detector output signal (S) prior to further evaluation for several chopper periods ($\frac{1}{f_5}$).

9. The method according to claim 7 or 8, characterized by experimentally determining the first and second coefficients (b, a) from at least two mesurements for predetermined body temperatures ($\vartheta_3$) and two values of the chopper induced temperature ($S_5$), and storing (41, 37) said first and second coefficients (b, a).

10. The method according to any of claims 1 to 9, characterized in effecting the temperature measurement by means of the detector (1) in the region of a recess (47), which is provided beforehand or formed therefor in the body (3), in order to increase a body volume component, wherein the temperature measurement is representative of the thermal energy content thereof.

11. The method according to claim 10 for bodies (3) which are driven with respect to the detector (1), characterized in selecting a chopper period ($\frac{1}{f_5}$) smaller than the time interval during which the recess (47) is located in the measuring range of the detector (1).

12. The method according to any of claims 1 to 11, characterized in that the body whose temperature is contactless measured is a can body.

13. An arrangement for contactless measuring the temperature of a body (3), comprising
    - a first temperature detector (1),
    - a heat radiation chopper (5) mounted upstream of the heat input of the first temperature detector (1),
    - at least one second temperature detector (13, 15) located in the region of the chopper (5) and/or the first temperature detector (1),
characterized in that the second temperature detector (15, 11) in connected as a set value sensor (X) in a temperature adjustment circuit setting the temperature in the region of the chopper.

14. The arrangement according to claim 13, characterized in that the second or a further temperature detector (13) is closely thermally coupled to a housing (11) of the first temperature detector (1).

15. The arrangement according to claim 13 or 14, characterized in that the second or a further temperature detector (15) is closely thermally coupled to the chopper (5).

16. The arrangement according to any of claims 13 to 15, characterized in that the chopper (5) is a mechanically driven chopper, and the second temperature detector (15) is disposed directly in the region of the chopper travel path.

17. The arrangement according to any of claims 13 to 16, characterized in that there is provided an assessing unit (29, 29a) having at least the outputs of a first and further temperature detector (1, 13, 15) connected thereto and outputting a signal ($S(\vartheta_3)$) representative of the body temperature ($\vartheta_3$).

18. The arrangement according to claim 17, characterized in that the further temperature detector (15) is disposed in the region of the chopper (5) and there is provided downstream of the input provided for said further temperature detector (15) at the assessing unit (29) a multiplying unit (35) having an ajustable value signal (37, b) transmitted to the second input thereof, in that the output of the multiplying unit (35) is connected to a summing unit (39) having an adjustable value transmitted (41, a) to the second input thereof, in that the output of the first temperature detector (1) is connected at the assessing unit to a numerator input of a dividing unit (43) having the output signal of the summing unit (39) transmitted to the denominator input thereof, and in that the output of the dividing unit (43) and the output of the further temperature detector (15) are connected to a summing unit (45) having its output connected to the output of the assessing unit (29).

19. The arrangement according to claim 18, characterized in that storage devices for the adjustable value signals (a, b) are connected (37, 41) to the second input of the multiplying unit (35) and to the summing unit (39) connected downstream thereof.

20. The arrangement according to any of claims 13 to 19, characterized in that there is provided downstream of the first temperature detector (1) an averaging unit (55) having an averaging time (N) longer than the chopper period ($\frac{1}{f_5}$).

21. The arrangement according to any of claims 13 to 20, characterized in that there is provided downstream of the first detector (1) a threshold value responsive unit (49) having its output operatively connecting (53) the output of the first detector (1) to an output of the arrangement when the value of the output signal (S) of the detector is above or below a predetermined level (R).

22. The arrangement according to claim 21, characterized in that the threshold value responsive unit (49), respectively the detector (1), is responsive to a predetermined change in the heat radiation detected by the detector (1) per unit time.

23. The arrangement according to any of claims 13 to 22, characterized in that the body whose temperature is contactless detected is a can body.

**Revendications**

1. Procédé pour mesurer sans contact la température d'un corps, selon lequel
   - on hache le rayonnement thermique entre le corps (3) et un détecteur de température (1) à l'aide d'un hacheur (5), et
   - on détecte au moins une température ambiante du détecteur du côté du hacheur (5) tourné vers le détecteur (1), caractérisé en ce qu'on règle la température détectée dans la zone du hacheur (5) à une valeur prédéfinie (21a, 27a, 19a), à l'aide d'un circuit de réglage de température comportant un organe de réglage de température qui agit sur le détecteur (1).

2. Procédé selon la revendication 1, caractérisé en ce qu'on détecte la température du boîtier de détecteur (11, $S_{11}$).

3. Procédé selon l'une des revendications 1 ou 2, caractérisé en ce qu'on détecte une température influencée par un fonctionnement mécanique du hacheur (5).

4. Procédé selon la revendication 2, caractérisé en ce qu'on règle la température du boîtier de détecteur (11) à une valeur prédéfinie (13, 21, 27, 19).

5. Procédé selon l'une des revendications 1 à 4, caractérisé en ce qu'on hache le rayonnement thermique à l'aide d'un hacheur (5, 5') déplacé mécaniquement, et on règle la température dans la zone de la trajectoire de hacheur ($S_5$).

6. Procédé selon l'une des revendications 1 à 5, caractérisé en ce qu'on mesure une température dans la zone du hacheur (5, 5') et on corrige (29) la température (S) mesurée à l'aide du détecteur (1) en fonction de celle-ci ($S_5$).

7. Procédé selon la revendication 6, caractérisé en ce qu'on multiplie un premier signal dépendant de la température ($S_5$) provoquée par le hacheur par un premier coefficient (b), on ajoute le résultat à un second coefficient (a) pour obtenir un second signal, puis on divise un troisième signal (S) dépendant de la température détectée à l'aide du détecteur (1) par le second signal pour obtenir un quatrième signal, et on ajoute celui-ci au premier ($S_5$) afin d'obtenir un signal ($S\vartheta_3$) représentatif du rayonnement du corps.

8. Procédé selon l'une des revendications 1 à 7, caractérisé en ce qu'on fait une moyenne (55) du signal de sortie de détecteur (S) avant la poursuite de l'évaluation sur plusieurs périodes de hacheur ($1/f_5$).

9. Procédé selon l'une des revendications 7 ou 8, caractérisé en ce qu'on définit expérimentalement les premier et second coefficients (b, a) à partir d'au moins deux mesures en présence de températures de corps ($\vartheta_3$) prédéfinies et de deux valeurs de la température ($S_5$) provoquée par le hacheur, et on les met en mémoire (41, 37).

10. Procédé selon l'une des revendications 1 à 9, caractérisé en ce que, pour augmenter un élément de volume de corps pour le contenu d'énergie thermique duquel la mesure de température est représentative, on procède à la mesure de température à l'aide du détecteur (1) dans la zone d'un creux (47) déjà prévu ou réalisé à cet effet sur le corps (3).

11. Procédé selon la revendication 10 pour des corps (3) déplacés par rapport au détecteur (1), caractérisé en ce qu'on choisit une période de hacheur (1/f₅) inférieure à l'intervalle de temps pendant lequel le creux (47) se trouve dans la zone de mesure du détecteur (1).

12. Procédé selon l'une des revendications 1 à 11, caractérisé en ce que le corps dont la température est mesurée sans contact est un corps de boîte.

13. Dispositif pour la mesure sans contact de la température d'un corps (3), comportant
    - un premier détecteur de température (1),
    - un hacheur de rayonnement thermique (5) monté en amont de l'entrée thermique du premier détecteur de température (1),
    - au moins un second détecteur de température (13, 15) situé dans la zone du hacheur (5) et/ou du premier détecteur de température (1),
    caractérisé en ce que le second détecteur de température (15, 11) est monté sous la forme d'un capteur de grandeurs de réglage (X) dans un circuit de réglage de température qui règle la température dans la zone du hacheur.

14. Dispositif selon la revendication 13, caractérisé en ce que le second détecteur de température ou un autre détecteur de température (13) est étroitement lié thermiquement à un boîtier (11) du premier détecteur de température (1).

15. Dispositif selon l'une des revendications 13 ou 14, caractérisé en ce que le second détecteur de température ou un autre détecteur de température (15) est étroitement lié thermiquement au hacheur (5).

16. Dispositif selon l'une des revendications 13 à 15, caractérisé en ce que le hacheur (5) est un hacheur déplacé mécaniquement, et le second détecteur de température (15) est disposé directement dans la zone de la trajectoire du hacheur.

17. Dispositif selon l'une des revendications 13 à 16, caractérisé en ce qu'il est prévu une unité d'évaluation (29, 29a) à laquelle sont reliées au moins les sorties d'un premier et d'un autre détecteur de température (1, 13, 15) et qui émet, côté sortie, un signal (S($\vartheta_3$)) représentatif de la température ($\vartheta_3$) du corps.

18. Dispositif selon la revendication 17, caractérisé en ce que l'autre détecteur de température (15) est disposé dans la zone du hacheur (5) et il est prévu, en aval de l'entrée prévue pour cet autre détecteur de température (15), au niveau de l'unité d'évaluation (29), une unité de multiplication (35) à la seconde entrée de laquelle est transmis un signal d'une valeur réglable (37, b), en ce que la sortie de l'unité de multiplication (35) est reliée à une unité d'addition (39) à la seconde entrée de laquelle est transmise (41, a) une valeur réglable, en ce que la sortie du premier détecteur de température (1) est reliée, au niveau de l'unité d'évaluation, à une entrée de numérateur d'une unité de division (43) à l'entrée de dénominateur de laquelle est transmis le signal de sortie de l'unité d'addition (39), et en ce que la sortie de l'unité de division (43) et la sortie de l'autre détecteur de température (15) sont reliées à une unité d'addition (45) dont la sortie est reliée à la sortie de l'unité d'évaluation (29).

19. Dispositif selon la revendication 18, caractérisé en ce que des organes de mise en mémoire pour les signaux (a, b) d'une valeur réglable sont reliés (37, 41) à la seconde entrée de l'unité de multiplication (35) et à l'unité d'addition (39) montée en aval de celle-ci.

20. Dispositif selon l'une des revendications 13 à 19, caractérisé en ce qu'il est prévu, en aval du premier détecteur de température (1), une unité de formation de valeur moyenne (55) dont le temps de calcul de moyenne (N) est plus long que la période de hacheur (1/f₅).

21. Dispositif selon l'une des revendications 13 à 20, caractérisé en ce qu'il est prévu, en aval du premier détecteur (1), une unité sensible aux valeurs seuils (49) dont la sortie relie de façon fonctionnelle (53) la sortie du premier détecteur (1) à une sortie du dispositif lorsque la valeur du signal de sortie (S) du détecteur est supérieure ou inférieure à un niveau prédéfini (R).

22. Dispositif selon la revendication 21, caractérisé en ce que l'unité sensible aux valeurs seuils (49) ou le détecteur (1) réagit à une variation prédéfinie du rayonnement thermique, détecté à l'aide du détecteur (1), par unité de temps.

23. Dispositif selon l'une des revendications 13 à 22, caractérisé en ce que le corps dont la température est mesurée sans contact est un corps de boîte.

FIG.1

FIG. 2a

FIG.2b

FIG.3

FIG. 4

FIG. 5

FIG. 6

14

**FIG.7**

FIG. 8